# EUROPÄISCHE PATENTSCHRIFT

(11) **EP 1 906 092 B1**
(45) Veröffentlichungstag und Bekanntmachung des Hinweises auf die Patenterteilung: **30.04.2014**
(21) Anmeldenummer: 06020672.9
(22) Anmeldetag: 30.09.2006
(51) Int. Cl.: F23N 5/26

(54) **Verfahren zur Regelung eines Verbrennungsprozesses**
Method for controlling a combustion process
Procédé pour réguler un procédé de combustion

(43) Veröffentlichungstag der Anmeldung: 02.04.2008
(73) Patentinhaber: STEAG Powitec GmbH, 45219 Essen (DE)
(72) Erfinder: Wintrich, Franz, 45309 Essen (DE); Stephan, Volker, 99976 Hüpstedt (DE)
(74) Vertreter: Patentanwälte Hosenthien-Held und Dr. Held

(56) Entgegenhaltungen:
- EP-A2- 0 955 499
- CH-A5- 663 999
- DE-A1- 4 308 055
- DE-B3- 10 219 251
- JP-A- 4 076 307

## Beschreibung

Die Erfindung betrifft ein Verfahren zur Regelung eines Verbrennungsprozesses, mit den Merkmalen des Oberbegriffs des Anspruches 1.

Bei einem aus der JP 04-076307 A bekannten Verfahren dieser Art und damit betriebenen Anlage wird eine Regelung mittels eines einfach aufgebauten Regelkreises durchgeführt. Die EP 0 955 499 A2 und die CH 663 999 A5 offenbaren entsprechende Anlagen und Verfahren. Mittels weiterer Sensoren könnte eine Optimierung der Regelung erfolgen, wenn das Übergangsverhalten des Regelkreises genauer bekannt wäre.

Der vorliegenden Erfindung liegt die Aufgabe zugrunde, ein Verfahren der eingangs genannten Art dahingehend zu verbessern, dass es automatisiert ablaufen kann. Diese Aufgabe wird durch ein Verfahren mit den Merkmalen des Anspruches 1 gelöst. Weitere vorteilhafte Ausgestaltungen sind Gegenstand der Unteransprüche.

Indem für Gruppen vergleichbarer Zustände das Verhalten des tatsächlichen Regelkreises auf das Verhalten eines Regelkreises mit einem Standard-Regler abgebildet wird, stehen Übergangsfunktionen zur Verfügung, mittels derer bessere Vorhersagen künftiger Zustände und eine optimierte Regelung möglich sind.

Die Erfindung kann bei verschiedenen stationären thermodynamischen Anlagen, insbesondere Kraftwerken, Müllverbrennungsanlagen und Zementwerken, eingesetzt werden.

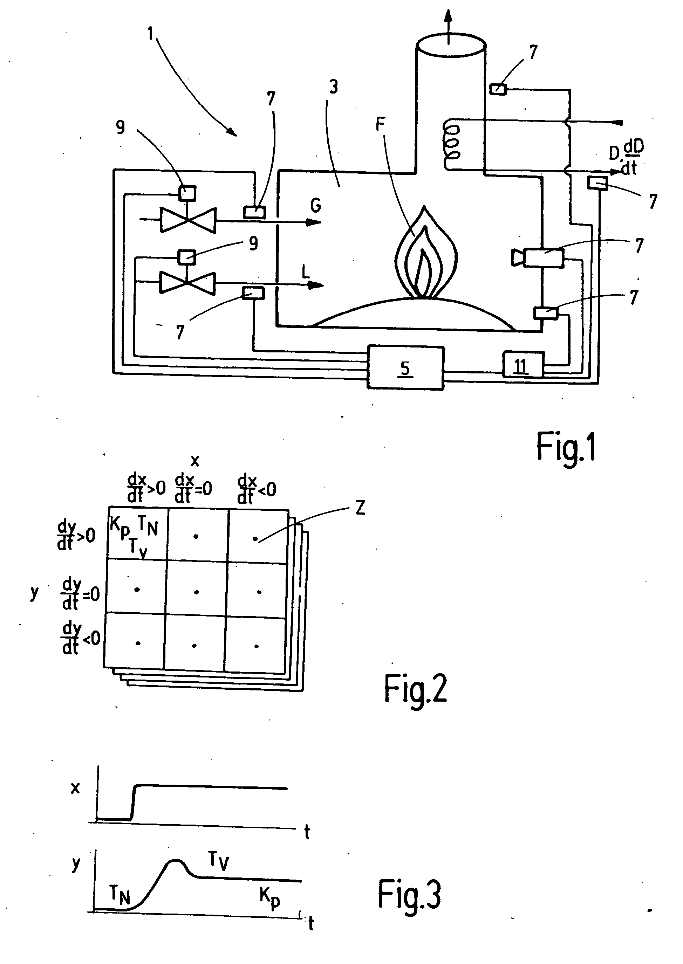

Im folgenden ist die Erfindung anhand eines in der Zeichnung dargestellten Ausführungsbeispiels näher erläutert. Es zeigen
- Fig. 1: eine schematische Darstellung eine Anlage,
- Fig. 2: eine schematische Darstellung der Tableaus der Paare von korrelierten Zustandsvariablen mit den zugeordneten Gruppen von vergleichbaren Zuständen, und
- Fig. 3: eine schematische Darstellung eines Sprungs und der Sprungantwort bei einem Paar korrelierten Zustandsvariablen.

Eine Anlage 1, beispielsweise ein Kohle-, Öl- oder Gaskraftwerk, eine Müllverbrennungsanlage oder ein Zementwerk, mit integrierter Dampferzeugung umfasst einen Ofen 3, worunter auch ein Rost verstanden werden soll, einen konventionellen Regler 5, wenigstens einen Sensor 7, wenigstens eine Stellvorrichtung 9, und einen Rechner 11.

Dem Ofen 3 wird Brennstoff oder anderes umzusetzendes Material, kurz als Gut G bezeichnet, beispielsweise Kohle, Öl, Gas, Müll, Kalk oder dergleichen, sowie Primärluft (bzw. -sauerstoff) und Sekundärluft (bzw. -sauerstoff), kurz als Luft L bezeichnet, zugeführt, wobei diese Zufuhr durch die Stellvorrichtungen 9 gesteuert wird. Die Ansteuerung einer Stellvorrichtung 9 ist als Aktion bezeichnet. Im Ofen 3 findet ein Verbrennungsprozess statt, als dessen Haupt- oder Nebenzweck Dampf erzeugt wird. Die Sensoren 7 erfassen - über die Zeit t hinweg - verschiedene Daten der Anlage 1, beispielsweise die Zufuhr von Gut G und Luft L, Bilder des Flammenkörpers F im Ofen 3, die erzeugte Dampfmenge D oder Dampfleistung dD/dt, Gas- und Schadstoffkonzentrationen im Abgas oder Temperaturen.

Durch wenigstens den Ofen 3 als (Regel-)Strecke, den Sensor 7 zur Erfassung der Dampfmenge D oder Dampfleistung dD/dt, den Regler 5 und die Stellvorrichtungen 9 wird ein Regelkreis definiert. An den Rechner 11 können weitere Sensoren 7 angeschlossen sein. Zum Ansteuern ist der Rechner 11 zumindest an den Regler 5, gegebenenfalls auch direkt an die Stellvorrichtungen 9 angeschlossen. Die Sensoren 7 erfassen - so gut wie möglich - den Zustand des System, welcher durch verschiedene Zustandsvariablen definiert ist. Einige der Zustandsvariablen, nämlich die Stellgrößen oder Eingangsgrößen x, sind den einzelnen Stellvorrichtungen 11 und deren Ansteuerungsmöglichkeiten zugeordnet. Andere erfassbare Zustandsvariablen, beispielsweise die Dampfmenge D oder Dampfleistung dD/dt sind Ausgangsgrößen y, bei denen die Abweichung des Istwertes vom Sollwert ermittelt wird. Wieder andere Zustandsvariablen, beispielsweise der Heizwert des Gutes G, sind Störgrößen, die nicht direkt erfasst werden können.

Der Rechner 11 soll die vom Regler 5 vorgenommene Regelung optimieren. Hierzu wird erfindungsgemäß das Verhalten des Regelkreises untersucht, um die Übergangsfunktionen im System der Anlage 1 zu erfassen und zu lernen.

Es zeigt sich, dass bestimmte Paare von Zustandsvariablen korreliert sind, d.h. in ihrem Verhalten einen engeren Zusammenhang zeigen als andere mögliche Kombinationen. Für jedes Paar korrelierter Zustandsvariablen, beispielsweise die Menge der zugeführten Luft L als eine Eingangsgröße x und die Dampfleistung dD/dt als eine Ausgangsgröße y, wird ein Tableau angelegt, welches Änderungen dx/dt der Eingangsgröße x in Beziehung zu Änderungen dy/dt der Ausgangsgröße y setzt. Es können aber auch zwei Ausgangsgrößen korreliert sein, beispielsweise der Sauerstoffgehalt und der Schwefeldioxidgehalt im Abgas, so dass sie ein eigenes Tableau erhalten.

Jedes Tableau enthält beispielsweise drei Zeilen und drei Spalten, also neun Zellen. Die drei Spalten stehen für eine Erhöhung der Eingangsgröße x (dx/dt > 0), eine wenigstens näherungsweise gleichbleibende Eingangsgröße x (dx/dt = 0) und eine Verringerung der Eingangsgröße x (dx/dt < 0). Die drei Zeilen stehen für eine Erhöhung der Ausgangsgröße y (dy/dt > 0), eine wenigstens näherungsweise gleichbleibende Ausgangsgröße y (dy/dt = 0) und eine Verringerung der Ausgangsgröße y (dy/dt < 0). Die einzelnen Zellen stehen somit jeweils für ein bestimmte Gruppe von - gegebenenfalls transienten - Zuständen Z, die bezüglich der Änderungen der beiden korrelierten Zustandsvariablen x und y vergleichbar sind.

Um die Zellen des Tableaus mit Inhalten zu füllen, wird angesetzt, dass das System durch einen fiktiven Standard-Regler, vorliegend einen PID-Regler, geregelt wird. Der PID-Regler lässt sich in an sich bekannter Weise durch drei Parameter charakterisieren, nämlich den Proportionalverstärkungsfaktor Kₚ, die Nachstellzeit T_{N} und die Vorhaltezeit Tv. Diese drei Parameter werden in jede Zelle eingesetzt. Die Sprungantwort, d.h. die Antwort des PID-Reglers auf einen Sprung an seinem Eingang, zeigt beispielsweise ein Überschwingen als transienten Zustand mit nachfolgender Annäherung an den neuen Zustand. Die mittlere Zelle gibt den Zustand am Sollwert wieder.

Die Parameter in den so präparierten Tableaus werden im Rechner 11 an Daten tatsächlicher Zustände angepasst, welche beispielsweise zunächst durch spezielles Anfahren von Zuständen gewonnen werden und später vorzugsweise aus dem laufenden Betrieb genommen werden. Dabei werden die Parameter jeder Zelle nach statistischen Methoden aus den Daten der zugehörigen Zustände ermittelt. Es können gängige Lernverfahren verwendet werden. Zur besseren Aufbereitung für den Rechner 11 können die Parameter aller Zellen aller Tableaus hintereinander aufgereiht werden. Dieses eindimensionale Feld sei als Genom bezeichnet.

Mit den ausgefüllten Tableaus kann der Rechner 11 nun bessere Vorhersagen künftiger Zustände treffen und damit die Regelung des Reglers 5 optimieren. Ändert sich der Zustand des System, beispielsweise durch Anstieg einer Ausgangsgröße y bei gleichbleibender Eingangsgröße x, so sucht der Rechner 11 diejenige Zelle mit derjenigen Gruppe von vergleichbaren Zuständen Z aus, welche von ihrer Einordnung in den Tableaus dem aktuellen Zustand am nächsten kommt, also im gewählten Beispiel dx/dt = 0 und dy/dt > 0. Mittels der dort gespeicherten Kₚ, T_{N} und Tᵥ. kann der Rechner 11 die weitere zeitliche Entwicklung des Zustandes abschätzen. Unter Einbeziehung von Informationen, die von weiteren Sensoren 7 geliefert werden, insbesondere dem Bild des Flammenkörpers F samt zugeordneter Bildverarbeitung, kann der Rechner 11, auf dem vorzugsweise ein neuronales Netz implementiert ist, künftige Zustände vorhersagen, die geeignete Aktion ermitteln und den Regler 5, insbesondere mittels Änderung der Sollwerte, oder gegebenenfalls direkt die Stellvorrichtungen 9 ansteuern, um frühzeitig dem Übergang in unerwünschte Zustände entgegenzuwirken. Mit einer solchen Regelung können verschiedene Ziele erreicht werden, beispielsweise Abweichungen des Istwertes der Dampfleistung dD/dt vom Sollwert minimal zu halten oder Schadstoffkonzentrationen im Abgas zu minimieren.

Die Möglichkeit, frühzeitig einem Übergang in unerwünschte Zustände entgegenzuwirken, also die Auswirkungen von Störgrößen zu begrenzen, erlaubt es, die Anlage 1 sehr nahe an der maximal zulässigen Dampfleistung dD/dt zu betreiben. Eine besonders interessante Störgröße ist der Heizwert des Gutes G. Mit sinkendem Heizwert bei gleichbleibendem Massenstrom des Gutes G sinkt die Dampfleistung dD/dt, so dass der Massenstrom erhöht werden müsste. Entsprechendes gilt für einen ansteigenden Heizwert. Mit Hilfe des Tableaus und der darin enthaltenen Übergangsfunktionen kann der aktuelle Zustand besser erkannt und eine Änderung des Heizwertes und deren Auswirkungen besser eingeschätzt werden, so dass frühzeitig nachgeregelt werden kann, ohne dass die Dampfleistung dD/dt sich wesentlich ändert.

### Bezugszeichenliste

- 1: Anlage
- 3: Ofen
- 5: Regler
- 7: Sensor
- 9: Stellvorrichtung
- 11: Rechner
- D: Dampfmenge
- dD/dt: Dampfleistung
- F: Flammenkörper
- G: Gut
- L: Luft
- Kₚ: Proportionalverstärkungsfaktor
- t: Zeit
- T_{H}: Nachstellzeit
- Tv: Vorhaltezeit
- x: Eingangsgröße
- dx/dt: Änderung der Eingangsgröße
- y: Ausgangsgröße
- dy/dt: Änderung der Ausgangsgröße
- Z: Zustand

## Patentansprüche

1. Verfahren zur Regelung eines Verbrennungsprozesses in einer Anlage (1), insbesondere einem Kraftwerk, einer Müllverbrennungsanlage oder einem Zementwerk, in welcher Gut (G) unter Zufuhr von Luft (L) mittels des Verbrennungsprozesses umgesetzt wird und der Zustand des Systems in der Anlage (1) durch Zustandsvariablen (x, y) beschrieben und wenigstens mittels eines Regelkreises (3, 5, 7, 9) geregelt wird, **dadurch gekennzeichnet, dass** für wenigstens ein Paar korrelierter Zustandsvariablen (x, y) Gruppen von Zuständen (Z) definiert werden, welche bezüglich Änderungen (dx/dt, dy/dt) der korrelierten Zustandsvariablen (x, y) vergleichbar sind, wobei jede Gruppe von vergleichbaren Zuständen (Z) hinsichtlich ihrer Übergangsfunktionen durch Parameter (Kₚ, Tₙ, Tᵥ) eines Standard-Reglers charakterisiert wird, und wobei die Parameter (Kₚ, Tₙ, Tᵥ) an Daten tatsächlicher Zustände angepasst werden, und dass bei Änderungen des Zustands des Systems in der Anlage (1) die nächstkommende Gruppen von vergleichbaren Zuständen (Z) ausgewählt und ihre durch die Parameter (Kₚ, Tₙ, Tᵥ) charakterisierten Übergangsfunktionen zur Regelung eingesetzt werden.

2. Verfahren nach Anspruch 1, **dadurch gekennzeichnet, dass** für jedes Paar korrelierter Zustandsvariablen (x, y) die möglichen Kombinationen sich erhöhender, wenigstens näherungsweise gleichbleibender und sich verringernder Zustandsvariablen (x, y) jeweils eine Gruppe von vergleichbaren Zuständen (Z) definieren, die vorzugsweise in ein Tableau eingeordnet werden.

3. Verfahren nach Anspruch 2, **dadurch gekennzeichnet, dass** neun Kombinationen gebildet werden.

4. Verfahren nach einem der vorhergehenden Ansprüche, **dadurch gekennzeichnet, dass** jede Gruppe von vergleichbaren Zuständen (Z) hinsichtlich ihrer Übergangsfunktionen durch Parameter (Kₚ, Tₙ, Tᵥ) eines PID-Reglers charakterisiert wird.

5. Verfahren nach einem der vorhergehenden Ansprüche, **dadurch gekennzeichnet, dass** die Parameter (Kₚ, Tₙ, Tᵥ) statistisch an Daten tatsächlicher Zustände angepasst werden.

6. Anlage (1), insbesondere Kraftwerk, Müllverbrennungsanlage oder Zementwerk, welche mittels eines Verfahrens nach einem der vorhergehenden Ansprüche geregelt wird, mit einem Ofen (3), in welchem das Gut (G) unter Zufuhr der Luft (L) mittels des Verbrennungsprozesses umgesetzt wird, einem Regler (5), wenigstens einem Sensor (7) zur Messung einer Zustandsvariablen (x, y), wenigstens einer Stellvorrichtung (9), wobei wenigstens der Ofen (3), der Regler (5), der Sensor (7) und die Stellvorrichtung (9) den Regelkreis (3, 5, 7, 9) definieren, und einem Rechner (11), welcher die vom Regler (5) vorgenommene Regelung optimiert, **dadurch gekennzeichnet, dass** der Rechner (11) die Gruppen von vergleichbaren Zuständen (Z) definiert, die Parameter (Kₚ, Tₙ, Tᵥ) an Daten tatsächlicher Zustände angepasst, bei Änderungen des Zustands des Systems in der Anlage (1) die nächstkommende Gruppen von vergleichbaren Zuständen (Z) ausgewählt und ihre durch die Parameter (Kₚ, Tₙ, Tᵥ) charakterisierten Übergangsfunktionen zur Vorhersage künftiger Zustände verwendet und zur Ansteuerung des Reglers (5) und/oder der Stellvorrichtung (9) einsetzt.

7. Anlage nach Anspruch 6, **dadurch gekennzeichnet, dass** im Rechner (11) ein neuronales Netz implementiert ist, mittels dessen der Rechner (11) künftige Zustände vorhersagt, eine geeignete Aktion ermittelt und den Regler (5) und/oder die Stellvorrichtung (9) ansteuert.

8. Anlage nach Anspruch 7, **dadurch gekennzeichnet, dass** der Rechner (11) zur Vorhersage künftiger Zustände außer den durch die Parameter (Kₚ, Tₙ, Tᵥ) charakterisierten Übergangsfunktionen weitere Informationen einbezieht, insbesondere aus der Bildverarbeitung des Bildes eines Flammenkörpers (F), welcher sich bei der Umsetzung des Gutes (G) ausbildet.

9. Anlage nach einem der Ansprüche 6 bis 8, **dadurch gekennzeichnet, dass** der Rechner (11) den Regler (5) mittels Änderung der Sollwerte von Zustandsvariablen (x, y) ansteuert.

## Claims

1. A method for regulating a combustion process in a plant (1), in particular a power-generating plant, a waste incineration plant or a cement works, in which material (G) is converted by the combustion process, while air (L) is being supplied, and the state of the system in the plant (1) is described by state variables (x, y) and is regulated at least by means of a control loop (3, 5, 7, 9), **characterized in that** for at least one pair of correlated state variables (x, y) groups of states (Z) are defined that are comparable with respect to changes (dx/dt, dy/dt) of the correlated state variables (x, y), wherein each group of comparable states (Z) is characterized, with respect to their transition functions, by parameters (Kₚ, Tₙ, Tᵥ) of a standard controller, and wherein the parameters (Kₚ, Tₙ, Tᵥ) are adapted to data of actual states, and **in that**, when changes occur in the state of the system in the plant (1), the closest groups of comparable states (Z) are selected and their transition functions being **characterized by** the parameters (Kₚ, Tₙ, Tᵥ) are used for the regulation.

2. A method according to Claim 1, **characterized in that** for each pair of correlated state variables (x, y) the possible combinations of state variables (x,y) that are increasing, remaining at least approximately constant, and decreasing in each case define a group of comparable states (Z) that are preferably arranged in a tableau.

3. A method according to Claim 2, **characterized in that** nine combinations are formed.

4. A method according to any of the preceding claims, **characterized in that** each group of comparable states (Z) is characterized, with respect to their transition functions, by parameters (Kₚ, Tₙ, Tᵥ) of a PID controller.

5. A method according to any of the preceding claims, **characterized in that** the parameters (Kₚ, Tₙ, Tᵥ) are statistically adapted to data of actual states.

6. A plant (1), in particular a power-generating plant, waste incineration plant or cement works, that is regulated by means of a method according to any of the preceding claims, having a furnace (3) in which the material (G) is converted by the combustion process, with air (L) being supplied, having also a controller (5), at least one sensor (7) for measuring a state variable (x, y), and at least one adjusting device (9), wherein at least the furnace (3), the controller (5), the sensor (7) and the adjusting device (9) define the control loop (3, 5, 7, 9), and having a computer (11) that optimizes the regulation performed by the controller (5), **characterized in that** the computer (11) defines the groups of comparable states (Z), adapts the parameters (Kₚ, Tₙ, Tᵥ) to data of actual states, selects the closest groups of comparable states (Z) when changes occur in the state of the system and uses their transition functions as **characterized by** the parameters (Kₚ, Tₙ, Tᵥ) to predict future states and to actuate the controller (5) and/or the adjusting device (9).

7. A plant according to Claim 6, **characterized in that** a neuronal network is implemented in the computer (11), and by means of which the computer (11) predicts future states, determines an appropriate action and actuates the controller (5) and/or the adjusting device (9).

8. A plant according to Claim 7, **characterized in that** in order to predict future states the computer (11), in addition to the transition functions **characterized by** the parameters (Kₚ, Tₙ, Tᵥ), includes further information, in particular from the image processing of the image of a flame body (F) that is formed during conversion of the material (G).

9. A plant according to any of Claims 6 to 8, **characterized in that** the computer (11) actuates the controller (5) by modifying the set-point values of state variables (x, y).

## Revendications

1. Méthode pour le réglage d'un procédé de combustion dans une installation (1), en particulier une centrale électrique, un incinérateur ou une cimenterie, dans laquelle de la matière (G) est transformée avec apport d'air (L) par le moyen du procédé de combustion et dans laquelle l'état du système dans l'installation (1) est décrit par des variables d'état (x; y) et est réglé par au moins un circuit de régulation (3, 5, 7, 9),
**caractérisée en ce que** pour au moins quelques variables d'état corrélées (x, y) des groupes d'états (Z), sont définis, lesquels sont comparables concernant des modifications (dx/dt, dy/dt) des variables d'état corrélées (x, y), où chaque groupe d'états comparables (Z) en ce qui concerne ses fonctions de transition est **caractérisé par** des paramètres (Kₚ, Tₙ, Tᵥ) d'un régulateur standard, et où les paramètres (Kₚ, Tₙ, Tᵥ) sont adaptés à des données d'états effectifs, et que dans le cas de modifications de l'état du système dans l'installation (1) les groupes suivants d'états comparables (Z) sont sélectionnés et leurs fonctions de transition **caractérisées par** les paramètres (Kₚ, Tₙ, Tᵥ) sont employées pour le réglage.

2. Méthode selon la revendication 1, **caractérisée en ce que** pour chaque paire de variables d'états corrélées (x, y) les combinaisons possibles de variables d'état croissantes, au moins approximativement invariables et décroissantes (x, y) chaque fois définissent un groupe d'états comparables (Z), qui sont classés préférablement dans une table.

3. Méthode selon la revendication 2, **caractérisée en ce que** neuf combinaisons sont formées.

4. Méthode selon l'une des revendications précédentes, **caractérisée en ce que** chaque groupe d'états comparables (Z) en ce qui concerne ses fonctions de transition est **caractérisé par** des paramètres (Kₚ, Tₙ, Tᵥ) d'un régulateur PID.

5. Méthode selon l'une des revendications précédentes, **caractérisée en ce que** les paramètres (Kₚ, Tₙ, Tᵥ) sont adaptés statistiquement à des données d'états effectifs.

6. Installation (1), en particulier centrale électrique, incinérateur ou cimenterie, laquelle est réglée par un procédé selon l'une des revendications précédentes, avec un four (3) dans lequel la matière (G) est transformée avec apport de l'air (L) au moyen du procédé de combustion, un régulateur (5), au moins un senseur (7) pour la mesure d'une variable d'état (x; y), au moins un dispositif de régulation (9), où au moins le four (3), le régulateur (5), le senseur (7) et le dispositif de régulation (9) définissent le circuit de régulation (3, 5, 7, 9), et un calculateur (11), lequel optimise le réglage effectué par le régulateur (5),
**caractérisée en ce que** le calculateur (11) définit les groupes d'états comparables (Z), adapte les paramètres (Kₚ, Tₙ, Tᵥ) à des données d'états effectifs, dans le cas de modifications de l'état du système dans l'installation (1) sélectionne les groupes prochains d'états comparables (Z) et emploie leurs fonctions de transition **caractérisées par** les paramètres (Kₚ, Tₙ, Tᵥ) pour la prévision de conditions futures et les utilise pour le pilotage du régulateur (5) et/ou du dispositif de régulation (9).

7. Installation selon la revendication 6, **caractérisée en ce que** dans le calculateur (11) un réseau neuronal est implémenté, par lequel le calculateur (11) prévoit des conditions futures, détermine une action appropriée et pilote le régulateur (5) et/ou le dispositif de régulation (9).

8. Installation selon la revendication 7, **caractérisée en ce que** le calculateur (11) pour la prévision d'états futurs utilise, à part les fonctions de transition **caractérisées par** les paramètres (Kₚ, Tₙ, Tᵥ), d'ultérieures informations, en particulier issues de la transformation de l'image d'un corps de flammes (F), lequel se forme pendant la transformation de la matière.

9. Installation selon l'une des revendications 6 à 8, **caractérisée en ce que** le calculateur (11) pilote le régulateur (5) au moyen du changement des valeurs nominales de variables d'état (x, y).
